# FASCICULE DE BREVET EUROPEEN

(11) **EP 3 155 921 B1**
(45) Date de publication et mention de la délivrance du brevet: **02.05.2018**
(21) Numéro de dépôt: 15189844.2
(22) Date de dépôt: 14.10.2015
(51) Int. Cl.: A44C 5/02

(54) **MAILLON RÉGLABLE POUR BRACELET**
REGULIERBARES KETTENGLIED FÜR ARMBAND
ADJUSTABLE LINK FOR BRACELET

(43) Date de publication de la demande: 19.04.2017
(73) Titulaire: The Swatch Group Research and Development Ltd., 2074 Marin (CH)
(72) Inventeur: Bravo, Paulo, 2074 Marin-Epagnier (CH)
(74) Mandataire: Ravenel, Thierry Gérard Louis

(56) Documents cités:
- EP-A1- 2 484 244
- CH-A2- 707 523

## Description

### Domaine de l'invention

L'invention concerne un maillon réglable pour bracelet, comportant au moins un premier demi-maillon et au moins un deuxième demi-maillon agencés pour être assemblés mobiles l'un par rapport à l'autre selon une direction longitudinale du bracelet.

### Arrière-plan de l'invention

Généralement, un bracelet est réglable au niveau de positions prédéterminées, qui permettent un repositionnement précis, et que l'utilisateur peut régler par coopération d'un doigt avec un trou parmi une pluralité de trous, ou par l'accrochage d'un pion sur une crémaillère, ou similaire. Des fermetures de type continu à maintien en position par frottement n'offrent pas une possibilité de repositionnement précis.

Il est connu du document CH 699067 un dispositif de réglage fin de la longueur d'un bracelet intégré dans le capot d'un fermoir, et comprenant un dispositif d'indexation dans deux positions prédéfinies, et qui comprend des poussoirs à ressort à bille solidaires d'une barrette transversale liés à une extrémité du bracelet et prévus pour coopérer avec des trous prévus dans le capot du fermoir.

Un tel dispositif agit de manière transversale, nécessite en général l'emploi d'un outil pour effectuer le réglage, et reste visible.

On connait également du document EP 2 484 244 un maillon réglable pour bracelet, comportant au moins un premier demi-maillon et au moins un deuxième demi-maillon agencés pour être assemblés mobiles l'un par rapport à l'autre selon une direction longitudinale du bracelet, avec un mécanisme réglable sans outil particulier, où le mécanisme de réglage reste dissimulé.

Un tel dispositif ne permet pas un réglage fin et continu de la position des demi-maillons et laisse apparaitre un jour au niveau de la pièce de liaison entre les demi-maillons, ce qui nuit à l'apparence du bracelet. De plus, le maillon peut se dérégler lors d'un choc, rien n'assurant un verrouillage fiable du réglage. Un autre dispositif de maillon réglable est connu du document CH 707 523, cependant, contrairement à l'invention la vis centrale liant les deux demi-maillons ne permet pas de régler la position des maillons lorsqu'elle est manipulée.

### Résumé de l'invention

L'invention a notamment pour objectif de pallier les différents inconvénients de ces techniques connues.

Plus précisément, un objectif de l'invention est de fournir un maillon réglable présentant un réglage fin et continu de la longueur des brins du bracelet sans pour autant nuire à l'aspect esthétique du bracelet.

L'invention a également pour objectif, au moins dans un mode de réalisation particulier, de fournir un maillon réglable qui ne nécessite pas d'outils, qui soit simple à mettre en oeuvre et peu coûteux.

Ces objectifs, ainsi que d'autres qui apparaîtront plus clairement par la suite, sont atteints selon l'invention à l'aide d'un maillon réglable pour bracelet, comprenant au moins un premier demi-maillon et au moins un deuxième demi-maillon agencés pour être assemblés mobiles l'un par rapport à l'autre selon une direction longitudinale du bracelet, comprenant des moyens de réglage.

Selon l'invention, le maillon comprend des moyens d'encliquetage coopérant avec des moyens d'encliquetage complémentaires de façon à constituer un ensemble imperdable, et en ce que ce que le premier demi-maillon comprend un trou traversant s'étendant selon la direction longitudinale du premier demi-maillon, le deuxième demi-maillon comprend un trou taraudé s'étendant selon la direction longitudinale du deuxième demi-maillon, le trou traversant et le trou taraudé étant alignés selon la direction longitudinale, les moyens de réglage comprenant une vis traversant le trou traversant et se vissant dans le trou taraudé de manière à faire translater le premier demi-maillon par rapport au deuxième demi-maillon selon la direction longitudinal lorsque la vis est manipulée.

Ainsi, l'objet de la présente invention, par ses différents aspects fonctionnels et structurels décrits ci-dessus, permet d'obtenir un maillon réglable relativement compact tout en ayant une longueur de course importante.

Conformément à d'autres variantes avantageuses de l'invention :
- le premier demi-maillon comprend des moyens de maintien axial de la vis de manière que la vis soit fixe en translation selon la direction longitudinale ;
- les moyens de réglage en continu comprennent des moyens de rappel élastiques disposés entre le trou traversant et le trou taraudé, de manière à maintenir en position le premier demi-maillon par rapport au deuxième demi-maillon ;
- le trou taraudé comprend une première section de diamètre D, et une deuxième section de diamètre d inférieur au diamètre D de la première section, la première section formant un logement pour une première extrémité du ressort de manière à prendre appui sur le deuxième demi-maillon ;
- le premier demi-maillon comprend, à proximité immédiate du trou traversant, un dégagement configuré pour recevoir la tête de la vis ;
- le logement comprend des moyens d'arrêt configurés pour coopérer avec des moyens d'arrêt complémentaires de la tête de vis ;
- les moyens d'encliquetage et les moyens d'encliquetage complémentaires comprennent un crochet, solidaire du premier demi-maillon, et un logement, solidaire du deuxième demi-maillon, configuré pour recevoir le crochet et former le montage imperdable entre le premier demi-maillon et le deuxième demi-maillon ;
- le crochet est déformable élastiquement de manière à pouvoir désolidariser le premier demi-maillon et le deuxième demi-maillon et changer un demi-maillon ;
- le crochet est mobile dans le logement selon la direction longitudinale du bracelet ;
- les moyens de réglage ont une course de réglage comprise entre 0mm et 3mm.

L'invention concerne également un brin de bracelet comprenant au moins un maillon réglable conforme à l'invention.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue éclatée d'un maillon réglable conforme à l'invention ;
- les figures 2a et 2b sont respectivement des vues en coupe d'un maillon réglable conforme à l'invention en position rétractée et en position déployée ;
- la figure 3 est une vue en perspective d'une vis ;
- les figures 4a et 4b sont respectivement des vues en perspective d'un premier demi-maillon et d'un deuxième demi-maillon conformes à l'invention ;
- les figures 5a et 5b sont des vues en perspective d'un brin de bracelet comprenant au moins un maillon réglable conforme à l'invention ;
- les figures 6a et 6b sont respectivement une vue en coupe d'un premier demi-maillon et d'un deuxième demi-maillon selon un deuxième mode de réalisation et une vue en perspective d'une vis selon ce deuxième mode de réalisation.

### Description détaillée des modes de réalisation préférés

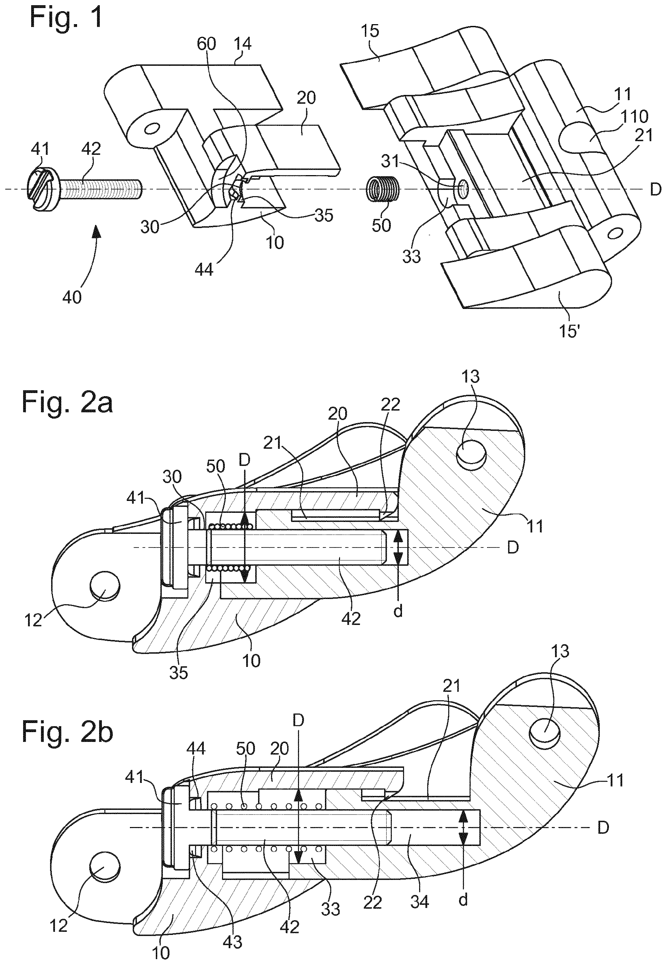

Un maillon réglable selon un premier mode de réalisation particulier va maintenant être décrit dans ce qui suit faisant référence conjointement aux figures 1, 2a, 2b, 3, 4a, 4b, 5a et 5b.

L'invention est décrite ici avec le cas simplifié et non limitatif de deux demi-maillons complémentaires mobiles l'un par rapport à l'autre, et il est naturellement possible de réaliser un maillon réglable selon l'invention comportant davantage d'éléments mobiles entre eux.

Le maillon 1 est formé par un premier demi-maillon 10 et un deuxième demi-maillon 11 assemblés entre eux. Le premier demi-maillon 10 et le deuxième demi-maillon 11 sont assemblés de façon à constituer un ensemble imperdable, par la coopération de moyens d'encliquetage et de moyens d'encliquetage complémentaires.

Selon l'invention, les moyens d'encliquetage et les moyens d'encliquetage complémentaires comprennent un crochet 20, solidaire du premier demi-maillon 10, et un évidement 21, solidaire du deuxième demi-maillon 20, configuré pour recevoir le crochet 20 et former le montage imperdable entre le premier demi-maillon 10 et le deuxième demi-maillon 11.

Comme on peut l'observer sur les figures, le premier demi-maillon 10 comporte au moins un crochet 20 formant la face inférieure du demi-maillon 10 et s'étendant selon la direction longitudinale D. L'extrémité 22 du crochet 20 forme un moyen de butée délimitant la course minimale et la course maximale du premier demi-maillon 10 par rapport au deuxième demi-maillon 11.

Le deuxième demi-maillon 11 comporte, de façon complémentaire, un évidement 21, de forme complémentaire au crochet 20, et formé dans la masse du deuxième demi-maillon 11. Tel que représenté sur les figures, l'évidement 21 est de forme rectangulaire et s'étend selon la direction longitudinale D, et est configuré pour permettre le déplacement du crochet 20 dans le sens de la longueur de l'évidement 21. La longueur de l'évidement 21 est délimitée par des parois verticales coopérant avec l'extrémité 22 du crochet 20.

Le crochet 20 formant la face supérieure du premier demi-maillon 10 et la face inférieure du premier demi-maillon 10 forment un logement configuré pour recevoir le deuxième demi-maillon 11, au niveau de l'évidement 21. Le deuxième demi-maillon 11 est ainsi recouvert par la face supérieure du premier demi-maillon 10 quel que soit l'écartement entre les deux demi-maillons 10 et 11, une telle disposition permet d'éviter un jour entre les demi-maillons 10 et 11 et d'obtenir un aspect esthétique satisfaisant.

Pour assembler les demi-maillons 10 et 11 entre eux, il suffit d'encliqueter le premier demi-maillon 10 au deuxième demi-maillon 11 de manière que le crochet 20 vienne se loger dans l'évidement 21, les demi-maillons 10 et 11 forment alors un ensemble imperdable et peuvent coulisser face contre face l'un par rapport à l'autre, le crochet 20 étant mobile dans l'évidement 21 selon la direction longitudinale D du bracelet.

Avantageusement, le crochet 20 est déformable élastiquement de manière à pouvoir désolidariser le premier demi-maillon 10 du deuxième demi-maillon 11 et changer un demi-maillon si nécessaire.

Selon l'invention, le maillon 1 comprend des moyens de réglage en continu de la position du premier demi-maillon 10 et deuxième demi-maillon 11 selon la direction longitudinale D du bracelet de manière à pouvoir régler la position désirée entre une position maximale et position minimale et obtenir la longueur utile du bracelet pour le porteur.

Comme décrit précédemment, le premier demi-maillon 10 comprend un trou traversant 30 s'étendant selon la direction longitudinale D, et le deuxième demi-maillon 11 comprend un trou borgne 31 taraudé s'étendant selon la direction longitudinale D, le trou traversant 30 et le trou borgne taraudé 31 étant alignés selon la direction longitudinale D, sensiblement l'un en face de l'autre et agencés pour coopérer avec les moyens de réglage en continu.

Comme on peut l'observer sur les figures, les moyens de réglage en continu comprennent d'une part une vis 40 munie d'une tête 41 et d'un corps fileté 42 et d'autre part, un taraudage 32 réalisé dans le trou borgne taraudé 31 pour coopérer avec le corps fileté 42 de la vis 40, la vis 40 étant agencée pour être insérée successivement dans le trou traversant 30 du premier demi-maillon 10 puis vissée dans le trou borgne taraudé 31 du deuxième demi-maillon 11.

Avantageusement, les moyens de réglage en continu comprennent des moyens de rappel élastiques, tels qu'un ressort 50, disposés entre le trou traversant 30 et le trou borgne taraudé 31, la vis 40 passant au travers du ressort 50, de manière à maintenir en position le premier demi-maillon 10 par rapport au deuxième demi-maillon 11 lorsqu'ils sont écartés l'un de l'autre.

Tel qu'illustré aux figures 2a et 2b, le trou borgne taraudé 31 comprend une première section 33 de diamètre D, et une deuxième section 34 de diamètre d inférieur au diamètre D de la première section 33. La première section 33 forme un logement configuré pour recevoir une première extrémité du ressort 50 de manière que le ressort 50 prenne appui sur le fond de la première section 33, et donc implicitement sur le deuxième demi-maillon 11.

Le trou traversant 30 comprend également une section de diamètre D supérieur au diamètre du trou traversant 30 pour former un logement 35 complémentaire configuré pour recevoir l'autre extrémité du ressort 50. Ainsi, le ressort 50 est logé entre le premier demi-maillon 10 et le deuxième demi-maillon 11, et traversé par la vis 40, de façon à pouvoir être comprimé ou détendu lorsque les demi-maillons 10 et 11 sont rapprochés ou éloignés.

Selon un mode de réalisation de l'invention, la course de réglage est comprise entre 0mm et 3mm. Le premier demi-maillon 10 peut par exemple être déplacé de 1mm par rapport au deuxième demi-maillon 11. Bien évidemment, le premier demi-maillon 10 peut prendre une multitude de positions entre 0 et 3mm, par exemple, 0.2mm ou encore 2.7mm.

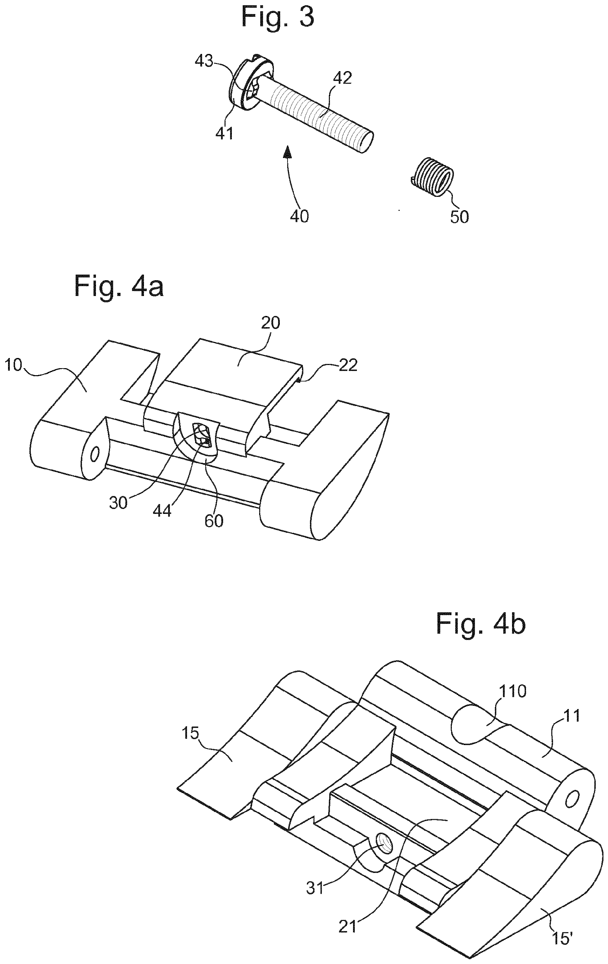

Comme on peut l'observer à la figure 4a, le premier demi-maillon 10 comprend, à proximité immédiate du trou traversant 30, un dégagement 60 configuré pour recevoir la tête 41 de la vis 40. Un tel dégagement 60 présente l'avantage de faciliter l'accès à la tête de vis 41 pour effectuer le réglage. On pourrait, par exemple, imaginer une tête de vis 41 présentant des crans sur sa périphérie pour faciliter le réglage manuel.

Le maillon 1 conforme à l'invention comprend des moyens de blocage de la vis 40 et des moyens de blocage complémentaires.

Avantageusement, le logement 60 reçoit les moyens de blocage configurés pour coopérer avec des moyens de blocage complémentaires de la tête de vis 41.

Les moyens de blocage comprennent au moins un ergot 43 formé derrière la tête de vis 41, à proximité immédiate du corps fileté 42 de la vis 40, l'au moins un ergot 43 étant configuré pour coopérer avec les moyens de blocage complémentaires formés par au moins un logement 44 de forme complémentaire à l'ergot 43. L'au moins un logement 44 est formé à l'entrée du trou traversant 30, au niveau du dégagement 60 pour la tête 41 de vis 41.

Tels que représentés sur les figures 3 et 4a, la vis 40 présente deux ergots 43, et les moyens de blocage complémentaires comprennent deux logements 44. Une telle disposition permet de bloquer la vis 40 toutes les rotations de 180° dans le sens horaire ou anti-horaire.

Les moyens de blocage et les moyens de blocage complémentaires définissent ensemble au moins une position verrouillée de la vis 40 pour maintenir la vis 40 en place. La vis 40 pouvant prendre une pluralité de position, elle peut donc prendre une pluralité de position de blocage.

Pour passer de la position verrouillée à la position déverrouillée, il convient de visser ou dévisser la vis 40, pour déloger l'au moins un ergot 43 de son logement 44 et ainsi rapprocher ou éloigner les demi-maillons 10 et 11. Tels que représentés sur les figures, les ergots 43 et les logements 44 bloquent la position de la vis 40 toutes les demi-rotations. A titre d'exemple, une demi-rotation de la vis 40 peut correspondre à un déplacement de 0.05 mm du premier demi-maillon 10 par rapport au deuxième demi-maillon 11.

Comme on peut le voir sur les figures, chaque demi-maillon 10 et 11 comprend des éléments décoratifs 14, 14', 15 et 15' sur leurs faces latérales. Ces éléments décoratifs 14, 14', 15 et 15' coopèrent entre eux par glissement au niveau de leur surface plane lorsque les demi-maillons 10 et 11 sont déplacés, et permettent de masquer les moyens de réglage et d'encliquetage.

Lorsque les demi-maillons 10 et 11 sont assemblés entre eux, les éléments décoratifs 14, 14', 15 et 15' sont plaqués entre eux au niveau de leur surface plane.

Comme on peut l'observer aux figures 1 et 4b, le deuxième demi-maillon 11 présente un alésage 110 configuré pour laisser passer la tête de vis 41 lorsqu'un autre demi-maillon est assemblé au deuxième demi-maillon 11.

Ce type de montage permet un montage extrêmement facile des demi-maillons 10 et 11 entre eux, ainsi qu'un réglage rapide, fiable et précis de la longueur utile des brins du bracelet.

Pour sa fixation à un bracelet ou à une pièce de bijouterie, joaillerie ou horlogerie, chaque demi-maillon 10 et 11 comporte des moyens d'attache 12, 13 à un autre demi-maillon, à une boite de montre entre les cornes, ou encore à un fermoir.

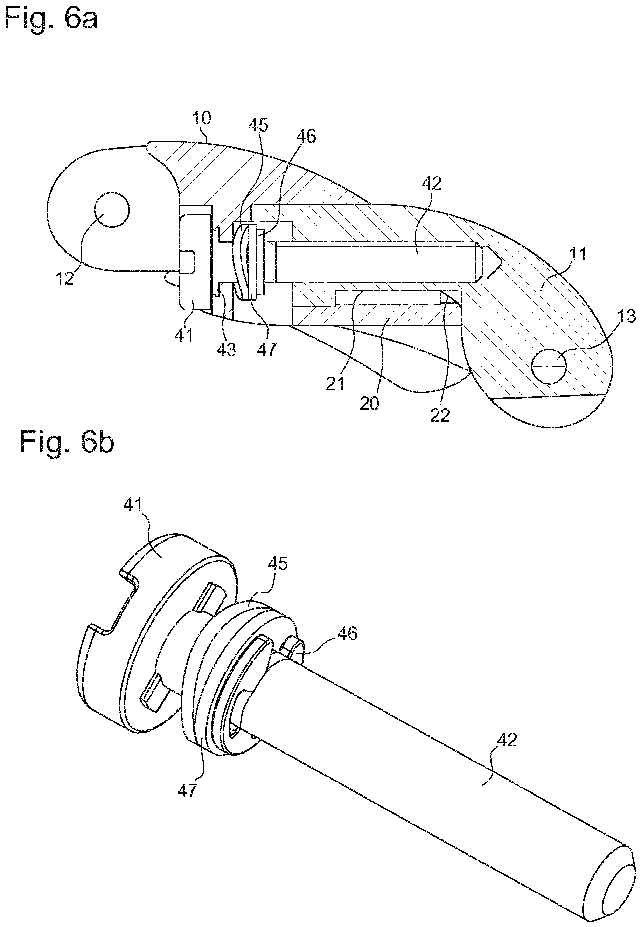

Un maillon réglable selon un deuxième mode de réalisation particulier va maintenant être décrit dans ce qui suit faisant référence conjointement aux figures 6a et 6b.

Dans ce deuxième mode de réalisation, le premier demi-maillon 10 et deuxième demi-maillon 20 sont quasiment identiques. Comme on peut le voir à la figure 6a, les premiers et deuxième demi-maillons 10 et 20 présentent un dégagement pour pouvoir placer des moyens de maintien axial de la vis 40 de manière que la vis 40 soit fixe en translation selon la direction longitudinale D.

Comme on peut l'observer plus en détail à la figure 6b, les moyens de maintien axial de la vis 40 comprennent un circlip 46 fixé sur la tige 42, à proximité de la tête 41, le circlip 46 formant une butée pour une rondelle intermédiaire 47 et une rondelle ressort 45.

Grâce à cet agencement la vis 40 est bloquée en translation et ne peut pas se dévisser du premier demi-maillon 10, la rondelle ressort 45 permettant d'éviter un dévissage involontaire de la vis 40 par rapport au deuxième demi-maillon 11.

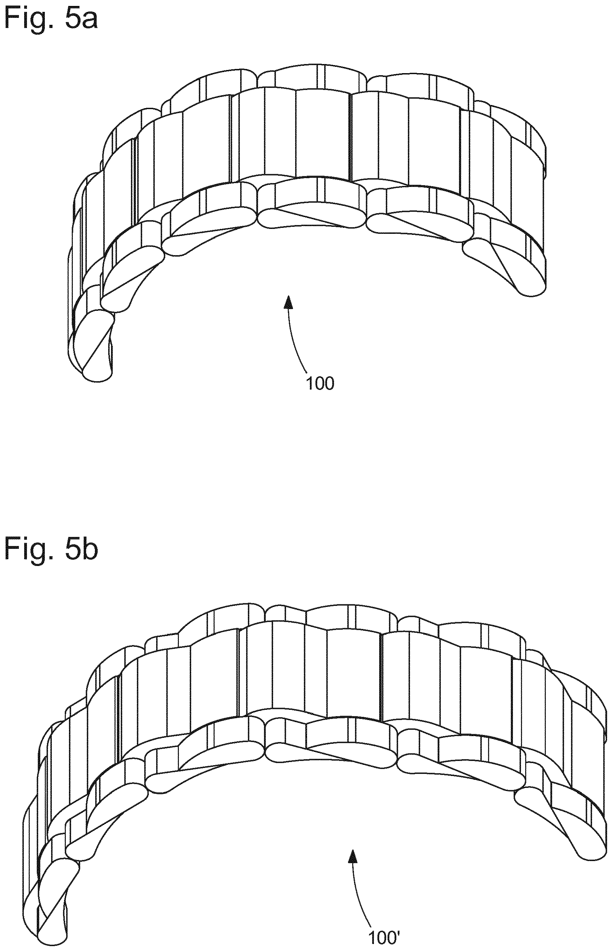

L'invention concerne également au moins un brin de bracelet comprenant au moins un maillon réglable conforme à l'invention. Un tel brin est représenté aux figures 5a et 5b, les figures illustrant respectivement un brin 100 de bracelet présentant sa longueur minimale et un brin 100' de bracelet présentant sa longueur maximale.

Grâce à ces différents aspects de l'invention, on dispose d'un maillon réglable 1 de conception simple permettant de régler sa longueur de course aisément et ainsi ajuster la longueur des brins 100, 100' de bracelet tout aussi facilement.

Bien entendu, la présente invention ne se limite pas à l'exemple illustré et est susceptible de diverses variantes et modifications qui apparaîtront à l'homme de l'art.

### NOMENCLATURE

1. Maillon réglable,
10. Premier demi-maillon,
11. Deuxième demi-maillon,
12,13. Moyens d'attache,
14,14'. Eléments décoratifs du premier demi-maillon,
15,15'. Eléments décoratifs du deuxième demi-maillon,
20. Crochet,
21. Evidement,
22. Extrémité du crochet,
30. Trou traversant,
31. Trou borgne taraudé,
32. Taraudage,
33. Première section de diamètre D,
34. Deuxième section de diamètre d,
35. Logement,
40. Vis,
41. Tête de vis,
42. Corps fileté,
43. Ergots,
44. Logements,
45. Rondelle ressort,
46. Circlip,
47. Rondelle intermédiare,
50. Ressort,
60. Dégagement,
100, 100'. Brins de bracelet,
110. Alésage,
D. Direction longitudinale du bracelet.

## Revendications

1. Maillon réglable (1) pour bracelet (2), comprenant au moins un premier demi-maillon (10) et au moins un deuxième demi-maillon (11) agencés pour être assemblés mobiles l'un par rapport à l'autre selon une direction (D) longitudinale du bracelet (2), comprenant des moyens de réglage (20),
le maillon comprenant des moyens d'encliquetage (20) coopérant avec des moyens d'encliquetage complémentaires (21) de façon à constituer un ensemble imperdable, et en ce que ce que le premier demi-maillon (10) comprend un trou traversant (30) s'étendant selon la direction longitudinale (D) du premier demi-maillon (10), le deuxième demi-maillon (11) comprend un trou taraudé (31) s'étendant selon la direction longitudinale (D) du deuxième demi-maillon (11), le trou traversant (30) et le trou taraudé (31) étant alignés selon la direction longitudinale (D), **caractérisé en ce que** les moyens de réglage comprennent une vis (40) traversant le trou traversant (30) et se vissant dans le trou taraudé (31) de manière à faire translater le premier demi-maillon (10) par rapport au deuxième demi-maillon (11) selon la direction longitudinal (D) lorsque la vis (40) est manipulée.

2. Maillon réglable (1) selon la revendication 1, dans lequel le premier demi-maillon (10) comprend des moyens de maintien axial de la vis (40) de manière que la vis (40) soit fixe en translation selon la direction longitudinale (D).

3. Maillon réglable (1) selon la revendication 1 ou 2, dans lequel les moyens de réglage en continu comprennent des moyens de rappel élastiques disposés entre le trou traversant (30) et le trou taraudé (31), de manière à maintenir en position le premier demi-maillon (10) par rapport au deuxième demi-maillon (11).

4. Maillon réglable (1) selon l'une des revendications 1 à 3, dans lequel le trou taraudé (31) comprend une première section (33) de diamètre D, et une deuxième section (34) de diamètre d inférieur au diamètre D de la première section (33), la première section (33) formant un logement pour une première extrémité des moyens de rappel élastiques de manière à prendre appui sur le deuxième demi-maillon (11).

5. Maillon réglable (1) selon l'une quelconque des revendications 1 à 4, dans lequel le premier demi-maillon (10) comprend, à proximité immédiate du trou traversant (30), un dégagement (60) configuré pour recevoir la tête (41) de la vis (40).

6. Maillon réglable (1) selon l'une quelconque des revendications 1 à 5, dans lequel le dégagement (60) comprend des moyens de blocage de la vis (40) configurés pour coopérer avec des moyens de blocage complémentaires de la vis (40).

7. Maillon réglable (1) selon l'une quelconque des revendications 1 à 6, dans lequel les moyens d'encliquetage et les moyens d'encliquetage complémentaires comprennent un crochet (20), solidaire du premier demi-maillon (10), et un évidement (21), solidaire du deuxième demi-maillon (11), configuré pour recevoir le crochet (20) et former le montage imperdable entre le premier demi-maillon (10) et le deuxième demi-maillon (11).

8. Maillon réglable (1) selon la revendication 7, dans lequel le crochet (20) est déformable élastiquement de manière à pouvoir désolidariser le premier demi-maillon (10) et le deuxième demi-maillon (11).

9. Maillon réglable (1) selon la revendication 7 ou 8, dans lequel le crochet (20) est mobile dans l'évidement (21) selon la direction longitudinale (D) du bracelet.

10. Maillon réglable (1) selon la revendication 1, dans lequel les moyens de réglage ont une course de réglage comprise entre 0 mm et 3 mm.

11. Brin (100, 100') de bracelet **caractérisé en ce qu'**il comprend au moins un maillon réglable (1) selon les revendications précédentes.

## Patentansprüche

1. Einstellbares Glied (1) für ein Armband (2), das mindestens ein erstes Halbglied (10) und mindestens ein zweites Halbglied (11), die dafür ausgelegt sind, in einer Längsrichtung (D) des Armbandes (2) relativ zueinander bewegbar zusammengefügt zu werden, und Einstellmittel (20) umfasst,
wobei das Glied Einrastmittel (20) umfasst, die mit komplementären Einrastmitteln (21) in einer Weise zusammenwirken, dass eine unverlierbare Anordnung gebildet wird, und dass das erste Halbglied (10) ein Durchgangsloch (30) aufweist, das sich in der Längsrichtung (D) des ersten Halbglieds (10) erstreckt, das zweite Halbglied (11) ein Gewindeloch (31) aufweist, das sich der Längsrichtung (D) des zweiten Halbglieds (11) erstreckt, wobei das Durchgangsloch (30) und das Gewindeloch (31) in Längsrichtung (D) fluchten, **dadurch gekennzeichnet, dass** die Einstellmittel eine Schraube (40) umfassen, die durch das Durchgangsloch (30) verläuft und in dem Gewindeloch (31) verschraubt ist, derart, dass das erste Halbglied (10) in Bezug auf das zweite Halbglied (11) in der Längsrichtung (D) verschoben wird, wenn die Schraube (40) betätigt wird.

2. Einstellbares Glied (1) nach Anspruch 1, wobei das erste Halbglied (10) Mittel zum axialen Halten der Schraube (40) umfasst, derart, dass die Schraube (40) in der Längsrichtung (D) translatorisch fest ist.

3. Einstellbares Glied (1) nach Anspruch 1 oder 2, wobei die Mittel für stufenloses Einstellen elastische Rückstellmittel umfassen, die zwischen dem Durchgangsloch (30) und dem Gewindeloch (31) in einer Weise angeordnet sind, dass das erste Halbglied (10) in Bezug auf das zweite Halbglied (11) an seiner Position gehalten wird.

4. Einstellbares Glied (1) nach einem der Ansprüche 1 bis 3, wobei das Gewindeloch (31) einen ersten Abschnitt (33) mit einem Durchmesser D und einen zweiten Abschnitt (34) mit einem Durchmesser d, der kleiner als der Durchmesser D des ersten Abschnitts (33) ist, umfasst, wobei der erste Abschnitt (33) einen Aufnahmeraum für ein erstes Ende der elastischen Rückstellmittel bildet, derart, dass sie sich auf dem zweiten Halbglied (11) abstützen.

5. Einstellbares Glied (1) nach einem der Ansprüche 1 bis 4, wobei das erste Halbglied (10) in direkter Nähe des Durchgangslochs (30) eine Aussparung (60) aufweist, die konfiguriert ist, den Kopf (41) der Schraube (40) aufzunehmen.

6. Einstellbares Glied (1) nach einem der Ansprüche 1 bis 5, wobei die Aussparung (60) Mittel zum Feststellen der Schraube (40) enthält, die konfiguriert sind, mit komplementären Mitteln zum Feststellen der Schraube (40) zusammenzuwirken.

7. Einstellbares Glied (1) nach einem der Ansprüche 1 bis 6, wobei die Einrastmittel und die komplementären Einrastmittel einen mit dem ersten Halbglied (10) fest verbundenen Haken (20) und eine mit dem zweiten Halbglied (11) fest verbundene Aussparung (21) umfassen, die konfiguriert ist, den Haken (20) aufzunehmen und den unverlierbaren Zusammenbau zwischen dem ersten Halbglied (10) und dem zweiten Halbglied (11) zu bilden.

8. Einstellbares Glied (1) nach Anspruch 7, wobei der Haken (20) elastisch verformbar ist, derart, dass das erste Halbglied (10) und das zweite Halbglied (11) voneinander lösbar sind.

9. Einstellbares Glied (1) nach Anspruch 7 oder 8, wobei der Haken (20) in der Aussparung (21) in der Längsrichtung (D) des Armbandes bewegbar ist.

10. Einstellbares Glied (1) nach Anspruch 1, wobei die Einstellmittel einen Verstellweg im Bereich von 0 mm bis 3 mm aufweisen.

11. Armbandstrang (100, 100'), **dadurch gekennzeichnet, dass** er mindestens ein einstellbares Glied (1) nach den vorhergehenden Ansprüchen umfasst.

## Claims

1. Adjustable link (1) for a bracelet (2), comprising at least a first half link (10) and at least a second half link (11) arranged to be assembled to move with respect to each other in a longitudinal direction (D) of the bracelet (2), comprising adjustment means,
the link comprising locking means (20) cooperating with complementary locking means (21) to form a captive assembly, and the first half link (10) comprises a through hole (30) extending in the longitudinal direction (D) of the first half link (10), the second half link (11) comprises a threaded hole (31) extending in the longitudinal direction (D) of the second half link (1), the through hole (30) and the threaded hole (31) being aligned in the longitudinal direction (D), **characterized in that** the adjustment means comprise a screw (40) passing through the through hole (30) and being screwed into the threaded hole (31) to cause the first half link (10) to move in translation with respect to the second half link (11) in the longitudinal direction (D) when the screw (40) is implemented.

2. Adjustable link (1) according to claim 1, wherein the first half link (10) comprises means of axially holding the screw (40) so that the screw is immovable in translation in the longitudinal direction (D).

3. Adjustable link (1) according to claim 1 or 2, wherein the continuous adjustment means comprise elastic return means disposed between the through hole (30) and the threaded hole (31), so as to maintain in position the first half link (10) with respect to the second half link (11).

4. Adjustable link (1) according to any of claims 1 to 3, wherein the threaded hole (31) comprises a first section (33) of diameter D, and a second section (34) of diameter d smaller than diameter D of the first section (33), the first section (33) forming a housing for a first end of the elastic return means so as to rest on the second half link (11).

5. Adjustable link (1) according to any of claims 1 to 4, wherein the first half link (10) comprises, in immediate proximity to the through hole (30), a countersunk or recessed portion (60) configured to receive the head (41) of the screw (40).

6. Adjustable link (1) according to any of claims 1 to 5, **characterized in that** the countersunk portion (60) comprises blocking means for the screw (40) configured to cooperate with complementary blocking means for the screw (40).

7. Adjustable link (1) according to any of claims 1 to 6, wherein the locking means and complementary locking means comprise a catch (20), integral with the first half link (10), and a recessed part (21), integral with the second half link (11), configured to receive the catch (20) and to form the captive assembly between the first half link (10) and the second half link (11).

8. Adjustable link (1) according to claim 7, wherein the catch (20) is elastically deformable to allow the first half link (10) and the second half link (11) to be disassembled.

9. Adjustable link (1) according to claim 7 or 8, wherein the catch (20) is movable in the recessed part (21) in the longitudinal direction (D) of the bracelet.

10. Adjustable link (1) according to claim 1, wherein the adjustment means have an adjustment travel comprised between 0 mm and 3 mm.

11. Bracelet strand (100, 100') **characterized in that** the strand comprises at least one adjustable link (1) according to any of the preceding claims.
